# EUROPEAN PATENT APPLICATION

(11) **EP 1 826 236 A1**
(43) Date of publication of application: **29.08.2007**
(21) Application number: 05809522.5
(22) Date of filing: 28.11.2005
(51) Int. Cl.: C08L 9/10, C08J 5/02, C08K 5/14, C08K 9/04, B29C 41/14

(54) **COMPOSITION FOR DIP FORMING AND DIP-FORMED MOLDING**

(30) Priority: 29.11.2004 JP 2004344877; 30.11.2004 JP 2004347831
(71) Applicant: ZEON CORPORATION, Tokyo 100-8246 (JP)
(72) Inventor: KODAMA, Kazumi c/o Zeon Corporation, Tokyo 1008246 (JP)
(74) Representative: Albrecht, Thomas
(86) International application number: PCT/JP2005/021825
(87) International publication number: WO 2006/057392

(57) **Abstract**

A dip-forming composition is provided, which can give a dip-formed article that exhibits good softness of touch and comfortable fittingness, a high tensile strength and an excellent flexural fatigue resistance, and which is less likely to color even when worn and subjected to working for a long time period. The above problem is solved by the dip-forming composition which is obtained by converting an organic peroxide, which is solid at 30 °C under normal pressure, to an aqueous dispersion in the presence of a surfactant and a polymeric protective colloid, adding the dispersion to a conjugated diene rubber latex, and aging the mixture. The organic peroxide is preferably dibenzoyl peroxide or dilauroyl peroxide.

## Description

### Technical Field

The present invention relates to a dip-forming composition which is to produce rubber gloves, etc. as well as to dip-formed articles. More specifically, the present invention relates to a dip-forming composition, which provides dip-formed articles having large tensile strength and high flexural fatigue resistance as well as such dip-formed articles. Further, the present invention relates to a dip-forming composition, which provides low surface electric resistivity and exhibits good softness of touch and comfortable fittingness and is less likely to color even when worn and subjected to working for a long time period. The invention also relates to such dip-formed articles.

### Background Art

Rubber gloves are used for wide applications in housekeeping, food-related industries, precision technology industries, medical services, etc. In order that a man may not get tired hands even when wearing rubber gloves for a long time, the rubber gloves are required to have various characteristics such as follows: they are expandable and contractible following the movement of the hands and exhibit good softness of touch and comfortable fittingness (small 300% tensile stress and large elongation); they are not torn during working (with sufficient tensile strength); and they are not deteriorated even when touching oils at work (resistance to oil).
Particularly in the case of thin rubber gloves, they are required to develop no fine cracks in forked portions between fingers even when worn and subjected to continuous working while constantly moving the fingers (large flexural fatigue resistance).
The above rubber glove is usually produced by attaching a coagulant such as calcium nitrate or calcium chloride to the surface of a hand-shaped forming form, then dipping the form into a dip-forming composition, which is composed mainly of a rubber latex, and forming a film of the rubber latex attached to the surface by heating after the form is pulled up.

In such a case, when the rubber gloves are used for preventing contamination from hands at the time of the production of precision electronic parts or semiconductor parts, the rubber gloves are usually used after being preliminarily washed with pure water or ultrapure water so that fine particles attached to the surfaces of the rubber gloves and metal ions contained in the gloves may be removed. However, when natural rubber is used as the latex, there are problems in that natural rubber has high electric insulation and a protein contained in it provokes an allergic reaction. Further, even when an acrylonitrile-butadiene copolymer latex is used, the surface electric resistivity of the rubber glove is more than 10¹⁰Ω/square, and tends to rise when it is washed with pure water or ultrapure water. If the surface electric resistivity of the rubber glove exceeds 10¹⁰Ω/square, there occurs a problem that static electricity is generated when it is worn and subjected to working, and the static electricity causes the fine electronic parts or the semiconductor parts to be broken.

As rubber gloves having high tensile strength and excellent oil resistance, rubber gloves are heretofore known, which are obtained by dip forming a dip-forming composition in which sulfur and a vulcanization accelerator are mixed into a copolymer latex of an acrylonitrile-butadiene-carboxyl group-containing ethylenically unsaturated monomer (carboxy-modified NBR) (For example, Patent Document 1). However, such gloves exhibit unsatisfactory softness of touch and comfortable fittingness, despite its less concern of being torn while worn resulting from its high tensile strength. Further, the surface electric resistivity of such gloves is still high. Patent Document 2 discloses a rubber glove dip-formed by using a dip-forming composition which contains a carboxy-modified NBR latex, zinc oxide, sulfur and a vulcanization accelerator. However, despite its excellent softness of touch and comfortable fittingness, this grove may be broken while being worn because of its insufficient tensile strength.
Patent Document 3 discloses a rubber glove dip-formed with a dip-forming composition, which contains a carboxy-modified NBR latex including a specified amount of carboxyl groups, a small amount of zinc oxide and a relatively large amount of sulfur and a vulcanization accelerator. However, although this glove had relatively excellent flexural fatigue resistance, it colored itself when worn and continuously subjected to working, and conspicuously damaged its commercial value in some cases.

Meanwhile, examinations have been made to obtain dip-formed articles by using a dip-forming composition into which an organic peroxide is mixed as a crosslinking agent without using sulfur or a vulcanization accelerator. For example, Patent Document 4 discloses a dip-formed article obtained by dip forming with a dip-forming composition in which dicumyl peroxide, di-t-butyl peroxide or the like is mixed into a latex of natural rubber or a synthetic rubber and performing a crosslinking reaction in a bath of a chemically inactive molten salt at a high temperature. However, although such rubber gloves exhibit good softness of touch and comfortable fittingness and sufficient tensile strength, there are problems such that they color on exposure to the high temperature during the production, and that they have inferior flexural fatigue resistance so that fine cracks are formed at forked portions between fingers on wearing for 2 to 3 hours.

Patent Document 1: WO97/048, 765
Patent Document 2: US Patent No. 5,014,362
Patent Document 3: WO00/021,451
Patent Document 4: WO01/077,210

### Disclosure of the Invention

### Problems to be solved by the Invention

Under the above circumstances, the present invention is aimed at providing a dip-forming composition, which can produce dip-formed articles that exhibit good softness of touch and comfortable fittingness, are excellent in tensile strength and flexural fracture resistance, and are less likely to color even when worn and subjected to working for a long time period. Further, the present invention is also aimed at providing a dip-forming composition, which can produce dip-formed articles that possess a low surface electric resistivity even after being washed with ultrapure water, exhibit good softness of touch and comfortable fittingness, and are excellent in tensile strength and flexural fracture resistance, and are less likely to color even after worn and subjected to working for a long time period.

### Means for Solving the Problems

Having strenuously made investigations to solve the above problems, the present inventors found that the above objects can be accomplished by a composition obtained by adding and mixing a specific organic peroxide and a specifically combined dispersion stabilizer together into a conjugated diene rubber latex and aging the mixture. The present inventors have completed the present invention based on this knowledge.
Thus, in the present invention, the following 1 to 14 are provided.
1. A dip-forming composition obtained by converting an organic peroxide being solid at 30°C under normal pressure to an aqueous dispersion in the presence of a surfactant and a polymeric protective colloid, adding the dispersion to a conjugated diene rubber latex, and aging the mixture.
2. The dip-forming composition set forth in item 1, in which the organic peroxide is dibenzoyl peroxide or dilauroyl peroxide.
3. The dip-forming composition set forth in item 1, in which the surfactant is an anionic surfactant or a nonionic surfactant.
4. The dip-forming composition set forth in item 1, in which the polymeric protective colloid is microcrystalline cellulose, hydroxyalkyl cellulose or polyvinyl alcohol.
5. The dip-forming composition set forth in item 1, in which the conjugated diene rubber latex is a latex of a copolymer of a conjugated diene monomer, a carboxyl group-containing ethylenically unsaturated monomer and a monomer copolymerizable therewith.
6. The dip-forming composition set forth in item 5, in which the monomer copolymerizable with the conjugated diene monomer and the carboxyl group-containing ethylenically unsaturated monomer is an ethylenically unsaturated nitrile monomer.
7. The dip-forming composition set forth in item 1, in which a condition for the aging is that stirring is performed at 10 to 50°C for not less than 1 hour.
8. The dip-forming composition set forth in item 1, which contains 0.01 to 5 parts by weight of the organic peroxide for 100 parts by weight of a solid component of the conjugated diene rubber latex, and 0.05 to 5 parts by weight of the surfactant and 0.1 to 20 parts by weight of the polymeric protective colloid for 100 parts by weight of the organic peroxide.
9. The dip-forming composition set forth in any one of items 1 to 8, which contains a carbon-carbon unsaturated bond-containing hydrocarbon group-containing quaternary ammonium salt.
10. The dip-forming composition set forth in item 9, in which the carbon-carbon unsaturated bond-containing hydrocarbon group of the carbon-carbon unsaturated bond-containing hydrocarbon group-containing quaternary ammonium salt is an allyl group.
11. The dip-forming composition set forth in item 8, which contains 0.1 to 10 parts by weight of the carbon-carbon unsaturated bond-containing hydrocarbon group-containing quaternary ammonium salt for 100 parts by weight of the solid component of the conjugated diene rubber latex.
12. A process for making a dip-forming composition, comprising:
   a step of preparing a quaternary ammonium salt-added latex by adding and mixing an aqueous solution of a carbon-carbon unsaturated bond-containing hydrocarbon group-containing quaternary ammonium salt into a conjugated diene rubber latex;
   a step of preparing an aqueous dispersion of an organic peroxide by dispersing the organic peroxide in an aqueous medium with the use of a surfactant and a polymeric protective colloid; and
   a step of adding and mixing the aqueous dispersion of the organic peroxide into the quaternary ammonium salt-added latex.
13. A dip-formed article obtained by dip forming the dip-forming composition set forth in any of items 1 to 11.
14. The dip-formed article set forth in item 13, which is a glove.

### Effects of the Invention

In the present invention, provided is the dip-forming composition, which can produce dip-formed articles that exhibit good softness of touch and comfortable fittingness, which is excellent in tensile strength and flexural fatigue resistance, and which is less likely to color even when worn and subjected to working for a long time period. Further provided is the dip-forming composition, which gives a low surface electric resistivity even after washing with ultrapure water.

### Best Mode for Carrying Out the Invention

The dip-forming composition according to the present invention is obtained by converting an organic peroxide which is solid at 30°C under normal pressure to an aqueous dispersion in the presence of a surfactant and a polymeric protective colloid, adding the dispersion to a conjugated diene rubber latex, and aging the mixture.

The conjugated diene rubber latex to be used in the present invention is not limited, so long as it is a latex of a rubber containing not less than 30% by weight of a conjugated diene monomer unit in the molecular structure. Such a conjugated diene rubber latex involves synthetic rubber latexes and natural rubber latexes. However, from the standpoint that various characteristics of the dip-formed article can be arbitrarily adjusted, the synthetic rubber latexes are preferable.

The synthetic rubber latexes are produced by polymerizing the conjugated diene monomer or copolymerizing the conjugated diene monomer and a monomer copolymerizable with this. Though the polymerizing method is not particularly limited, a radical polymerization through an emulsion polymerization method is preferably employed. Among the monomers copolymerizable with the conjugated diene monomers, an ethylenically unsaturated acid monomer is preferable, because dip-formed articles having higher tensile strength are obtained by using it.

The conjugated diene monomer is not particularly limited, so long as it is a compound containing a conjugated diene and having 4 to 12 carbon atoms. As examples of such a conjugated diene monomer, 1,3-butadiene, isoprene, 2,3-dimethyl-1,3-butadiene, 2-ethyl-1,3-butadiene, 1,3-pentadiene, chloroprene, and the like are recited. Among them, 1,3-butadiene and isoprene are preferable. Each of these conjugated diene monomers can be used singly or two or more kinds of them can be used in combination.
The amount of the conjugated monomer(s) used is preferably 30 to 100% by weight, more preferably 50 to 84% by weight, and particularly preferably 55 to 81% by weight with respect to that of all the monomers used. If this amount is too small, the softness of touch and comfortable fittingness tend to be inferior, whereas if it is too large, the tensile strength tends to be low.

The ethylenically unsaturated acid monomer is not particularly limited, so long as it is a compound having 3 to 12 carbon atoms, one carbon-carbon double bond, and 1 to 4 carboxyl groups, sulfonic groups, phosphoric groups or sulfuric groups. As examples of such ethylenically unsaturated acid monomers, carboxyl group-containing ethylenically unsaturated monomers, sulfonic group-containing ethylenically unsaturated monomers, phosphoric group-containing ethylenically unsaturated monomers can be recited, and the like.

As examples of the carboxyl group-containing ethylenically unsaturated monomers, mention may be made of ethylenically unsaturated monocarboxylic acids such as acrylic acid, methacrylic acid, crotonic acid, and the like; ethylenically unsaturated polyvalent carboxylic acids and their anhydrides such as fumaric acid, maleic acid, itaconic acid, maleic anhydride, itaconic anhydride, and the like; and partially esterified compounds of ethylenically unsaturated polyvalent carboxylic acids, such as methyl maleate, methyl itaconate, and the like; etc.
As examples of the sulfonic group-containing ethylenically unsaturated monomers, mention may be made of vinyl sulfonate, methylvinyl sulfonate, styrene sulfonic acid, (meth)allyl sulfonic acid, (meth)acrylic acid-2-ethyl sulfonate, 2-acrylamide-2-hydroxypropane sulfonic acid, and the like.
As examples of the phosphoric group-containing ethylenically unsaturated monomers, mention may be made of (meth)acrylic acid-3-chloro-2-propyl phosphate, and (meth)acrylic acid-2-ethyl phosphate, 3-aryloxy-2-hydroxypropane phosphoric acid and the like.
Each of these ethylenically unsaturated acid monomers may be used singly or two or more kinds of them can be used in combination. Further, they can be used in the form of alkali metal salts or ammonium salts.
Among the above-mentioned ethylenically unsaturated acid monomers, preferably the carboxyl group-containing ethylenically unsaturated monomers, more preferably the ethylenically unsaturated monocarboxylic acid, and particularly preferably methacrylic acid can be used.

The amount of the ethylenically unsaturated acid monomer used is preferably 0.5 to 10% by weight, more preferably 1 to 9% by weight and particularly preferably 2 to 8% by weight with respect to that of all the monomers used. If this amount is too small, the tensile strength tends to be low, whereas if it is too large, the softness of touch and comfortable fittingness tends to be inferior.

Although the monomer copolymerizable with the conjugated diene monomer and the ethylenically unsaturated acid monomer (hereinafter referred also to as "other monomer") is not particularly limited, mention may be made, for example, of ethylenically unsaturated nitrile monomers such as acrylonitrile, methacrylonitrile, 2-chloropropene nitrile, 2-butene nitrile, and the like; aromatic vinyl monomers such as styrene, α-methyl styrene, monochlorostyrene, dichlorostyrene, trichlorostyrene, monomethylstyrene, dimethylstyrene, trimethylstyrene, hydroxymethylstyrene, and the like; ethylenically unsaturated carboxylic amide monomers such as acrylamide, methacrylamide, N,N-dimethylacrylamide, N-methylol acrylamide, and the like; ethylenically unsaturated carboxylic acid alkyl ester monomers such as methyl (meth)acrylate, ethyl (meth)acrylate, butyl (meth)acrylate, (meth)acrylic acid-2-ethyl hexyl, and the like; carboxylic acid vinyl ester monomers such as vinyl acetate, vinyl propionate, vinyl versatate, and the like; halogenated vinyl monomers such as vinyl chloride, vinylidene chloride, vinyl fluoride, vinylidene fluoride, and the like; olefin monomers such as ethylene, propylene, 1-butene, isobutene, and the like; vinyl ether monomers such as methylvinyl ether, n-propylvinyl ether, isobutylvinyl ether, dodecylvinyl ether, and the like; (meth)allyl compounds such as allyl acetate, methallyl acetate, allyl chloride, methallyl chloride, and the like; vinylsilyl compounds such as vinyltrimethoxy silane, and the like; vinyl pyridine; N-vinyl pyrrolidone; etc. Each of them can be used singly or two or more kinds of them can be used in combination.
Among these other monomers, preferably the ethylenically unsaturated nitrile monomers, the aromatic vinyl monomers, and the ethylenically unsaturated carboxylic acid alkyl ester monomers, and more preferably the ethylenically unsaturated nitrile monomers can be used. The aromatic vinyl monomers and the ethylenically unsaturated nitrile monomers are preferable from the standpoint that they can provide dip-formed articles having higher tensile strength. Further, the ethylenically unsaturated nitrile monomers can be more preferably used from the standpoint that they can provide dip-formed articles also having good oil resistance.

The amount of the above-mentioned other monomer used is preferably 0 to 69.5% by weight, more preferably 7 to 49% by weight and particularly preferably 11 to 43% by weight with respect to that of all the monomers used. With the amount of this range, the tensile strength, the oil resistance and the softness of touch and comfortable fittingness can be well maintained.

As examples of a method of adding the monomer, mention may be made of a method of adding the monomer to be used into a reaction vessel in a lump sum, a method of continuously or intermittently adding the monomer into the reactor vessel according to the progress of the polymerization, and a method of adding and polymerizing a part of the monomer (s) into the reaction vessel, reacting it up to a specific conversion rate and then continuously or intermittently adding the remaining monomer. Any of the methods may be employed. When the monomers are mixed and continuously or intermittently added, the composition of the mixture may be constant or changed.
Further, the monomers to be used may be preliminarily mixed and then added into the reaction vessel, or each of them may be separately added thereinto.

When the above monomer mixture is emulsion polymerized, polymerization adjuvants generally used such as an emulsifier, a polymerization initiator, a molecular weight modifier, and the like can be used. A method of adding these polymerization adjuvants is not particularly limited, and any of an initial stage batch addition method, a divisional addition method, and a continuous addition method, etc. can be adopted.

The emulsifier is not particularly limited, but mention may be made, for example, of anionic surfactants such as alkylbenzene sulfonic acid salts, aliphatic sulfonic acid salts, sulfuric acid ester salts of higher alcohols, α-olefin sulfonic acid salts, alkyl ether sulfuric acid ester salts, and the like; nonionic surfactants such as polyethylene glycol alkyl ethers, polyethylene glycol alkyl esters, polyethylene glycol alkylphenyl ethers, and the like; cationic surfactants such as alkyldiamine salts, tetraalkyl ammonium salts, and the like; ampholytic surfactants having, as anion portions, carboxylic acid salts, sulfuric acid ester salt, sulfonic acid salts, phosphoric acid salts, phosphoric acid ester salts or the like and, as cationic portions, amine salts or quaternary ammonium salts or the like; etc. Among them, the anionic surfactants can be preferably used.
The amount of the emulsifier used is preferably 0.5 to 10 parts by weight, more preferably 1 to 8 parts by weight with respect to 100 parts by weight of all the monomers used.

The polymerization initiator is not particularly limited, so long as it belongs to a radical initiator.
However, mention may be made, for example, of inorganic peroxides such as sodium persulfate, potassium persulfate, ammonium persulfate, potassium perphosphate, hydrogen peroxide, and the like; organic peroxides such as t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanoyl peroxide, t-butylperoxy isobutylate, and the like; azo compounds such as azobisisobutyronitrile, azobis-2,4-dimethylvaleronitrile, azobiscyclohexane carbonitrile, methyl azobisisobutyrate , and the like; etc. Each of these polymerization initiators can be used singly or two or more kinds of them can be used in combination. The peroxide can be used as a redox type polymerization initiator in combination with a reducing agent such as sodium bisulfite, ferrous sulfate or the like. As the polymerization initiator, preferably the inorganic or organic peroxide, more preferably the inorganic peroxide, and particularly preferably the persulfate salt can be used.
The amount of the polymerization initiator used is preferably 0.01 to 2 parts by weight, more preferably 0.05 to 1.5 parts by weight with respect to 100 parts by weight of all the monomers used.

The molecular weight modifier is not particularly limited, but mention may be made, for example, of α-methylstyrene dimer; mercaptans such as t-dodecyl mercaptan, n-dodecyl mercaptan, octyl mercaptan, and the like; halogenated hydrocarbons such as carbon tetrachloride, methylene chloride, methylene bromide, and the like; sulfur-containing compounds such as tetraethyl thiuram disulfide, dipentamethylene thiuram disulfide, diisopropyl xanthogen disulfide, and the like; etc. Each of these compounds can be used singly or two or more kinds of them can be used in combination. Among them, preferably mercaptans, and more preferably t-dodecyl mercaptan can be used.
The amount of the molecular weight modifier used differs depending upon the kind thereof, and is in a range of preferably 0.1 to 0.8 parts by weight and more preferably 0.2 to 0.7 parts by weight with respect to 100 parts by weight of all the monomers used.

The emulsion polymerization is usually performed in water. The amount of water used is preferably 80 to 500 parts by weight and more preferably 100 to 200 parts by weight with respect to 100 parts by weight of all the monomers used.

Further, use can be made of polymerization adjuvants such as a chelating agent, a dispersant, a pH adjuster, an dioxidizer, a particle-diameter conditioner, and the like depending upon the need. The kinds and the amounts of them are not particularly limited.

The polymerization temperature is not particularly limited, but it is usually 0 to 95°C, and preferably 5 to 70°C. After the polymerization reaction is stopped, non-reacted monomers are removed at need, and a conjugated diene rubber latex is obtained by adjusting the concentration of the solid component and the pH.

To the conjugated diene rubber latex to be used in the composition according to the present invention, the followings may be properly added according to need: an antioxidant, a preservative, an antibacterial agent, an ultraviolet absorber, and a pH adjuster.

The organic peroxide to be used in the composition of the present invention is required to be a compound containing -O-O-bond in the molecular structure, producing free radicals when heated to at least 100°C and being solid at 30°C under normal pressure.
As the compounds containing -O-O-bond in the molecular structure and producing free radicals when heated to at least 100 °C, mention may be made, for example, of peroxy ketals such as 1,1-bis(t-hexylperoxy)3,3,5-trimethylcyclohexane, 1,1-bis(t-hexylperoxy)-cyclohexane, 1,1-bis(t-butylperoxy)3,3,5-trimethylcyclohexane, 1,1-bis-(t-butylperoxy) cyclohexane, 1,1-bis(t-butylperoxy) cyclododecane, 2,2-bis(4,4-di-t-butylperoxy cyclohexyl)propane, and the like; dialkyl peroxides such as α, α'-bis(t-butylperoxy-m-isopropyl)benzene, dicumyl peroxide, 2,5-dimethyl-2,5-bis(t-butylperoxy)hexane, t-butylcumyl peroxide, di-t-butyl peroxide, and the like;

diacyl peroxides such as diisobutyryl peroxide, di-2,4-dichlorobenzoyl peroxide, di-3,5,5-trimethyl hexanoyl peroxide, dioctanoyl peroxide, dilauroyl peroxide, distearoyl peroxide, disuccinic acid peroxide, di-m-toluoyl peroxide, dibenzoyl peroxide, and the like; peroxydicarbonates such as di-n-propylperoxy dicarbonate, di-isopropylperoxy dicarbonate, bis-(4-t-butylcyclohexyl)peroxy dicarbonate, di-2-ethoxyethylperoxy dicarbonate, di-2-ethylhexylperoxy carbonate, di-2-methoxybutylperoxy dicarbonate, di(3-methyl-3-methoxybutyl)peroxy dicarbonate , and the like;

peroxyesters such as (α,α'-neodecanoylperoxy) di-isopropylbenzene, cumylperoxy neodecanoate, 1,1,3,3-tetramethylbutylperoxy neodecanoate, 1-cyclohexyl-1-methylethylperoxy neodecanoate, 1-hexylperoxy neodecanoate, t-butylperoxy neodecanoate, t-hexylperoxy pivalate, t-butylperoxy pivalate, 1,1,3,3,-tetramethybutylperoxy-2-ethylhexanoate, 2,5-dimethyl-2,5-bis(2-ethylhexanoylperoxy)hexane, 1-cyclohexyl-1-methylethylperoxy-2-ethylhexanoate, t-butylperoxy-2-ethylhexanoate, t-butylperoxy isobutyrate, t-hexylperoxyisopropyl monocarbonate, t-butylperoxy maleic acid, t-butylperoxy-3,5,5-trimethylhexanoate, t-butylperoxy laurate, 2,5-dimethyl-2,5-bis(m-toluoylperoxy)hexane, t-butylperoxyisopropyl monocarbonate, t-butylperoxy-2-ethylhexyl monocarbonate, 1-hexylperoxybenzoate, 2,5-dimethyl-2,5-bis(benzoylperoxy)hexane, t-butylperoxy acetate, t-butylperoxy benzoate, bis-t-butylperoxy isophthalate, and the like; etc.

Among them, the organic peroxides to be used in the composition according to the present invention are solid at 30°C under normal pressure. The 10-hour half-life temperatures of the above organic peroxides are preferably not more than 120°C, and more preferably not more than 100°C. As such organic peroxides, mention may be made, for example, of dibenzoyl peroxide, benzoyl(3-methylbenzoyl) peroxide, di(4-methylbenzoyl) peroxide, dilauroyl peroxide, distearoyl peroxide, di-α-cumyl peroxide, 1,1-bis (t-butylperoxy) cyclododecane, succinic acid peroxide, bis(4-t-butylcyclohexyl)peroxy dicarbonate, t-butylperoxy maleic acid, and the like. Each of the organic peroxide can be used singly, or two or more kinds of them can be used in combination.
Dibenzoyl peroxide and dilauroyl peroxide can be preferably used as the organic peroxides from the standpoint that dip-formed articles obtained have an excellent balance in physical properties.

The organic peroxide can be used in a powdery form, or in the form of an organic solvent solution having a concentration of 1 to 60% by weight. When the organic peroxide is used in the powdery form, the average particle diameter of the powder is preferably 0.01 to 200µm, more preferably 0.1 to 150µm, and particularly preferably 0.1 to 100µm as the diameter corresponding to 50% by weight in the cumulative particle diameter distribution in an analysis using a JIS standard sieve. If the average particle diameter of the organic peroxide is too small, it tends to float at the surface of the latex, whereas if the average particle diameter is too large, it tends to be precipitated.

The organic solvent to dissolve the above organic peroxide is not particularly limited, so long as it can dissolve the organic peroxide. For example, mention is preferably made of organic solvents having boiling points of less than 200°C, such as acetone, tetrahydrofuran, dioxane, diethyl ether, ethyl acetate, hexane, cyclohexane, benzene, toluene, and the like; organic solvents having boiling points of not less than 200°C, such as dimethyl phthalate, diethyl phthalate, dibutyl phthalate, di-(2-ethylhexyl) phthalate, di-n-octyl phthalate, di-isooctyl phthalate, di-isodecyl phthalate, di-tridecyl phthalate, di-isononyl phthalate, dimethyl isophthalate, di-(2-ethylhexyl)tetrahydrophthalate, dibutyl adipate, dimethyl adipate, di-(2-ethylhexyl) adipate, di-isobutyl adipate, diisodecyl adipate, di-n-octyl adipate, di-n-decyl adipate, di-isononyl adipate, dibutyldiglycol adipate, di-(butoxyethoxyethyl) adipate, di-(2-ethylhexyl) azelate, di-n-hexyl azelate, tri-(2-ethylhexyl) trimellitate, tri-n-octyl trimellitate, tri-isooctyl trimellitate, glyceryl monooleate, methylacetyl ricinoleate, butylacetyl ricinoleate, n-butyl stearate, triethyl phosphate, tributyl phosphate, tri-(2-ethylhexyl) phosphate, 2-ethylhexyldiphenyl phosphate, tributoxyethyl phosphate, triphenyl phosphate, and the like.
Meanwhile, when the organic peroxide is to be dissolved in the organic solvent, heating can be performed within a range in which the organic peroxide is not rapidly decomposed.
The concentration at which the organic peroxide is dissolved in the organic solvent is not particularly limited, but it is usually preferably 5 to 60% by weight, and more preferably 8 to 50% by weight. If this concentration is too low, there is a tendency that it becomes difficult to remove the organic solvent from a dip-formed article obtained, or a large amount of the organic solvent remains in the dip-formed article to decrease the tensile strength. To the contrary, too high concentration tends to make it difficult to prepare the solution.

The content of the organic peroxide in the composition according to the present invention is preferably 0.01 to 5 parts by weight, more preferably 0.05 to 3 parts by weight, and particularly preferably 0.1 to 2 parts by weight with respect to 100 parts by weight of the solid component of the conjugated diene rubber latex. If the content of the organic peroxide is too low, the flexural fatigue resistance of the dip-formed article tends to be inferior. To the contrary, if the content is too high, the softness of touch and comfortable fittingness and the tensile strength tend to be inferior.

The surfactant to be used in the composition according to the present invention is not limited, so long as it is a common surfactant: an anionic surfactant, a nonionic surfactant, a cationic surfactant or an amphoteric surfactant. As such surfactants, mention is made of the emulsifiers to be used in the polymerization reaction of the above-mentioned conjugated diene rubber latex and further, anionic surfactants such as methyl taurine acid salt, alaninates and their salts, polyethylene glycol alkyl ether sulfuric acid salts, polyethylene glycol alkyl ether acetic acid salts, monoalkyl phosphoric acid salts, naphthalene sulfonic acid salt-formalin condensation products, and the like; nonionic surfactants such as polyethylene glycol, polyethylene glycol di-fatty acid esters, glycerin fatty acid esters, sorbitan alkyl esters, polyhydroxylic alcohol alkyl esters, polyethylene glycol sorbitan alkyl esters, polyoxyethylene sorbitol fatty acid esters, and the like. Among them, the anionic surfactants and the nonionic surfactants are preferable. Among the anionic surfactants, the polyethylene glycol alkyl ether sulfuric acid salts and the naphthalene sulfonic acid salt-formalin condensation products are more preferable. Among the nonionic surfactants, polyethylene glycol sorbitan alkyl esters and polyethylene glycol alkyl ethers are more preferable.

The content of the surfactant in the composition according to the present invention is preferably 0.05 to 20 parts by weight, more preferably 0.1 to 10 parts by weight, and particularly preferably 0.2 to 5 parts by weight with respect to 100 parts by weight of the solid component of the organic peroxide. If the content of the surfactant is too small, there is a tendency that the dispersion stability of the organic peroxide is worse and the peroxide is likely to be precipitated. To the contrary, if the content is too large, the physical properties of the dip-formed article tend to be worse.

The polymeric protective colloid to be used in the composition according to the present invention is not limited, so long as it is a polymeric dispersion stabilizer having the molecular weight of not less than 10,000. As examples of the polymeric protective colloides, mention may be made of gelatin; polyvinyl alcohol; cellulose derivatives including methyl cellulose, hydroxyalkyl cellulose, hydroxypropoxymethyl cellulose, carboxymethyl cellulose, microcrystalline cellulose, and the like. Each of these polymeric protective colloids can be used singly, or two or more kinds of them can be used in combination. Among them, preferably the microcrystalline cellulose, the hydroxyalkyl cellulose and the polyvinyl alcohol, and more preferably microcrystalline cellulose can be used.
The microcrystalline cellulose has the crystallinity of preferably not less than 90% and more preferably not less than 95% and the average particle diameter of preferably not more than 20µm and more preferably not more than 10µm. As the hydroxyalkyl cellulose, the alkyl group is preferably a methyl group or an ethyl group. The average molecular weight is preferably 10, 000 to 5, 000, 000, more preferably 20, 000 to 3,000,000, and particularly preferably 50,000 to 2,000,000. The polyvinyl alcohol has a saponification degree of preferably 60 to 99%, more preferably 70 to 99% and particularly preferably 80 to 99% and the average molecular weight of preferably 10,000 to 500,000 and more preferably 20,000 to 300,000.

The content of the polymeric protective colloid in the composition according to the present invention is preferably 0.1 to 20 parts by weight, more preferably 0.5 to 15 parts by weight and particularly preferably 1 to 10 parts by weight with respect to 100 parts by weight of the organic peroxide. If the content of the polymeric protective colloid is too small, there is a tendency that the dispersion stability of the organic peroxide is worse and the peroxide is readily precipitated. To the contrary, if the content is too large, the physical properties of the dip-formed article tend to be worse.

The composition according to the present invention may contain a carbon-carbon unsaturated bond-containing hydrocarbon group-containing quaternary ammonium salt.
By this, when the dip forming is performed by using the dip-forming composition according to the present invention, it is possible to obtain a dip-formed article which has the following characteristics: a low surface electric resistivity, good softness of touch and comfortable fittingness, excellent tensile strength and the flexural fatigue resistance even after being washed with ultrapure water, and less likely to color even after worn and subjected to working for a long time period.
The carbon-carbon unsaturated bond-containing hydrocarbon group-containing quaternary ammonium salt to be used in the composition according to the present invention has a chemical structure having the following formula (1).

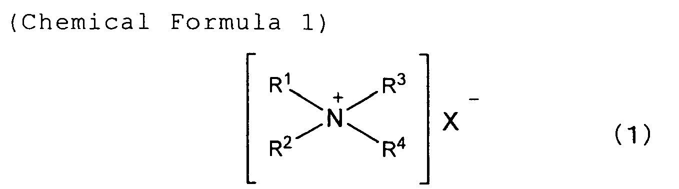

(Here, R1 and R2 are hydrocarbon groups having 2 to 8 carbon atoms and said hydrocarbon group may contain substituent groups, and at least one of R1 and R2 has one or more carbon-carbon unsaturated bonds. R3 and R4 are hydrogens or saturated hydrocarbon groups having 1 to 4 carbon atoms. X is a halogen atom.)
As the hydrocarbon group containing the above carbon-carbon unsaturated bond(s) (carbon-carbon unsaturated bond-containing hydrocarbon group), allyl group is preferable, and more preferably both of R1 and R2 are allyl groups. More specifically, a diallydialkyl ammonium salt is most preferable as the carbon-carbon unsaturated bond-containing hydrocarbon group (s) -containing quaternary ammonium salt to be used in the composition according to the present invention.

The content of the quaternary ammonium salt (which is hereinafter also referred to as "quaternary ammonium salt (1)" in some cases) in the composition according to the present invention is preferably 0.1 to 10 parts by weight, more preferably 0.2 to 7 parts by weight and particularly preferably 0.5 to 5 parts by weight with respect to 100 parts by weight of the solid component of the above conjugated diene rubber latex. If the content of the quaternary ammonium salt (1) is too small, there is a tendency that the dispersion stability of the organic peroxide is worse and the peroxide is likely to be precipitated. In addition, it is feared that the tensile strength and the flexural fatigue resistance of the obtained dip-formed article are worse. To the contrary, if the content is too large, the stability of the latex can be worse.

When a dip-formed article is obtained by using the dip-forming composition in which the carbon-carbon unsaturated bond-containing hydrocarbon group(s)-containing quaternary ammonium salt, the organic peroxide, the surfactant and/or the polymeric protective colloid are mixed into the conjugated diene rubber latex, the same effects as in the present application are exhibited if the above compound containing -O-O-bond in the molecular structure and producing free radicals when heated to at least 100°C is used as an organic peroxide.

According to the preparing process for the composition of the present invention, a dispersion is prepared by dispersing the organic peroxide into an aqueous medium in the presence of the surfactant and a water-soluble polymer and then adding and mixing the dispersion into the conjugated diene rubber latex. The dispersion is preferably added into the conjugated diene rubber latex placed in a stirred state.

As a preparing process for the composition according to the present invention which contains the above quaternary ammonium salt (1), a process is preferable, in which a quaternary ammonium salt (1)-added latex is prepared by adding and mixing an aqueous solution of the quaternary ammonium salt (1) into the conjugated diene rubber latex, an aqueous dispersion of the organic peroxide is separately prepared by dispersing the organic peroxide into an aqueous medium with the use of the surfactant and/or the polymeric protective colloid, and the above aqueous dispersion of the organic peroxide is added and mixed into the quaternary ammonium salt (1)-added latex.

The method of preparing the aqueous dispersion of the organic peroxide is not particularly limited. However, for example, there are (1) a method in which a powdery organic peroxide is vigorously stirred and dispersed into an aqueous medium having a surfactant and/or a polymeric protective colloid dissolved therein, and the organic peroxide is finally dispersed and stabilized with both the surfactant and the polymeric protective colloid; (2) a method in which a liquid having an organic peroxide dissolved in an organic solvent is added into an aqueous medium with a surfactant and/or a polymeric protective colloid dissolved, the mixture is vigorously stirred, the organic peroxide is precipitated from the phase of the organic solvent and dispersed in the aqueous solvent, and the organic peroxide is finally dispersed and stabilized with both the surfactant and the polymeric protective colloid; and (3) a method in which the organic peroxide is dispersed in the aqueous medium by distilling off the organic solvent subsequent to the method (2). As a stirrer for performing the above vigorous stirring, a homomixer, a stirring type homogenizer, etc. are preferable.
The concentration of the organic peroxide in the aqueous dispersion is preferably 1 to 50% by weight, more preferably 2 to 45% by weight and particularly preferably 5 to 40% by weight. If the concentration is too low, it is noneconomic and may increase the amount of the handling work. To the contrary, if the concentration is too high, the fluidity of the dispersion is worse, which may deteriorate the operationality.

When the organic peroxide is added, the pH of the conjugated diene rubber latex is set preferably not less than 8.5 and more preferably in a range of 9 to 11 from the standpoint that formation of coarse aggregates is prevented.

Since the dip-forming composition according to the present invention contains the above organic peroxide as the crosslinking agent for the conjugated diene rubber, the balance in the physical properties of the resulting dip-formed article tends to be deteriorated, if a large amount of sulfur and/or a vulcanization accelerator (for example, zinc dibutyl dithiocarbamate, or 2-mercaptobenzothiazole, etc.) usually used is mixed. For this reason, when sulfur is also mixed in addition to the organic peroxide, the mixed amount of sulfur is set preferably at not more than 0.5 parts by weight and more preferably at not more than 0.3 parts by weight with respect to 100 parts by weight of the solid component of the above conjugated diene rubber latex.
Meanwhile, when the vulcanization accelerator is also mixed in addition to sulfur, the mixed amount of the vulcanization accelerator is set at preferably not more than 0.3 part by weight and more preferably not more than 0.1 part by weight with respect to 100 parts by weight of the solid component of the above conjugated diene rubber latex. When the balance in the physical properties of the dip-formed article is taken into consideration, it is most preferable to mix neither sulfur nor the vulcanization accelerator.

When the conjugated diene rubber contains the carboxyl group, zinc oxide can be mixed into the dip-forming composition according to the present invention in such a range that ion crosslinking between the carboxyl groups does not substantially hinder the effects of the present invention. The mixed amount of zinc oxide is preferably not more than 2 parts by weight, more preferably not more than 1 part by weight and particularly preferably not more than 0.6 part by weight with respect to 100 parts by weight of the solid component of the above conjugated diene rubber latex.

Into the composition according to the present invention can be appropriately incorporated additives which are usually mixed into the dip-forming composition, such as an inorganic pigment, a colorant, a dispersant, a pH adjuster, a wetting agent, a preservative, an antibacterial agent, wax, and a sizing agent, etc.

When the arbitrary components such as the above-mentioned sulfur, vulcanization accelerator, zinc oxide, and additives are incorporated into the composition according to the present invention, the entire part or a part of the pH adjuster may be preliminarily added into the conjugated diene rubber latex, and it is preferable that the remainder is added after the organic peroxide, the surfactant and the polymeric protective colloid are mixed into the conjugated diene rubber latex.

The concentration of the solid component of the composition according to the present invention is preferably 20 to 40% by weight and more preferably 25 to 35% by weight.
The pH of the composition according to the present invention is preferably not less than 8.5 and more preferably in a range of 9 to 11.
When the composition according to the present invention having the above range of the solid component concentration or the above pH range is used, a dip-formed article having a uniform film thickness is easily made.

In the composition according to the present invention, after the above dispersion of the organic peroxide and further any arbitrary components to be compounded at need are added and mixed into the conjugated diene rubber latex, the mixture needs to be aged. The aging condition is that the mixture is stirred while the temperature is kept at preferably 10 to 50°C, more preferably 15 to 45°C and particularly preferably 20 to 30°C for preferably not less than 1 hour, more preferably 1 hour to two weeks and particularly preferably 1 hour to one week. The time period is selected from the above range by considering the temperature. If the aging is insufficient, the organic peroxide tends to be separated and precipitated from the above conjugated diene rubber latex.

The dip-formed article according to the present invention can be obtained by performing a dip forming method in which after a dip-forming form or an object to be covered (hereinafter represented by "dip-forming form ") is dipped into the dip-forming composition according to the present invention and pulled up therefrom, a film is formed by heating a dip-formed layer attached to the surface.
As such a dip forming method, a conventionally known dip forming method can be employed. For example, a direct dipping method, an anode coagulation dipping method, and a Teague coagulation dipping method can be recited. Among them, the anode coagulation dipping method is preferable in that the dip-formed article having a uniform thickness is easily obtained.

According to the anode coagulation dipping method, the dip-forming form is first dipped in a solution of a coagulant, the coagulant is attached to the surface of the dip-forming form, then the dip-forming form is dipped into the dip-forming composition, and a dip-formed layer is formed on the surface of the dip-forming form.

As the dip-forming form, those made of various materials such as porcelain, glass, metals, and plastics can be used. The shape of the form which meets that of the dip-formed article as a final product had only to be used. In the case that the dip-formed articles are gloves, dip-forming forms having various shapes, such as a dip-forming form having a shape from a wrist to fingertips, or which having a shape from an elbow to fingertips can be used. The entire or partial surface of the form may undergo a surface processing such as luster processing, semi-luster processing, non-luster processing, or texture pattern processing.

As the coagulant, a salting-out agent is used. For example, mention can be made of halogenated metals such as barium chloride, calcium chloride, magnesium chloride, zinc chloride, and aluminum chloride, and the like; nitrates such as barium nitrate, calcium nitrate, and zinc nitrate, and the like; acetates such as barium acetate, calcium acetate, and zinc acetate, and the like; and sulfates such as calcium sulfate, magnesium sulfate, and aluminum sulfate, and the like; etc. Among them, calcium chloride and calcium nitrate are preferable.
The coagulant is usually used as being dissolved in water, an alcohol or a mixture of them. The concentration of the coagulant is preferably 5 to 70% by weight and more preferably 10 to 50% by weight. In order to prevent the coagulant from being repelled by the dip-forming form, the nonionic surfactant may be added to give the concentration of preferably 0.001 to 1.0% by weight and more preferably 0.01 to 0.5 % by weight.

Next, the dip-formed layer is subjected to a crosslinking step in which the conjugated diene rubber is crosslinked by a heat treatment of the dip-formed layer obtained. Before that, the dip-formed layer may be subjected to a leaching step in which it is dipped in water, preferably warm water at 20 to 80°C for around 0.5 to 60 minutes to remove water-soluble impurities (emulsifier, water-soluble polymer, coagulant, etc.). Although this operation may be performed after the dip-formed layer is subjected to the heat treatment, it is preferably performed before the heat treatment from the standpoint that the water-soluble impurities can be more effectively removed.
Further, if the dip-formed layer contains much water, a drying step at 40 to 100°C for 1 to 60 minutes can be added before the crosslinking step.

The temperature in the heat treatment for the dip-formed layer is preferably 60 to 160°C and more preferably 80 to 150°C. If this temperature is too low, the crosslinking reaction requires a long time period, so that the productivity may be worse. To the contrary, if the temperature is too high, there is a possibility that the physical properties of the formed article are deteriorated through the promotion of the oxidation degradation of the conjugated diene rubber. The time period for the heat treatment is selected in conjunction with the temperature in the heat treatment, but it is generally not less than 5 minutes and not more than 2 hours. In this heat treatment, the conjugated diene rubber is crosslinked with the organic peroxide and a tough film is formed.
As the heating method, an externally heating method with infra-red rays or hot air or an internally heating method with high-frequency waves can be adopted. Among them, the heating with the hot air is preferable.

By removing the crosslinked dip-formed layer from the dip-forming form (When the object to be covered with a film undergoes the dip forming, it is merely subjected to the heat treatment), the dip-formed article is obtained. Various form-removing methods such as a method in which the dip-formed article is removed from the forming form with hands, and a method in which it is removed from the forming form by the pressure of water or the pressure of compressed air.

After the removal, the dip-formed article may be further heated at a temperature of 60 to 120°C for 10 to 120 minutes (Post crosslinking step).

In addition, the inner surface and/or the outer surface of the dip-formed article may be subjected to such as a chlorinating treatment, or a coating treatment to form a surface-treated layer.

The dip-formed article according to the present invention can be made thin in a thickness of preferably about 0.05 to about 3mm and more preferably 0.05 to 0.3 mm. The formed article exhibits good softness of touch and comfortable fittingness, excellent tensile strength and flexural fatigue resistance, and is less likely to color.
As concrete examples of the dip-formed articles according to the present invention, recitation is made of medical goods such as nipples for nursing bottles, droppers, tubes, and water pillows, and the like; toys and sporting goods such as balloons, dolls, and balls, and the like; industrial goods such as bags for press forming, and bags for gas storage, and the like; industrial gloves for surgical uses, domestic uses, agricultural uses, and fishery uses and industrial uses, and the like; finger stalls; etc. The gloves may be of a supported type or an unsupported type. Among the above goods, the thin surgical glove is a preferable example.

The present invention is not limited to the above embodiments. The above embodiments are examples, and any products having substantially the same construction and the same functions and effects as in the technical idea recited in the claims for the present invention are encompassed by the technical scope of the present invention. The present invention also encompasses the dip-forming composition in which the quaternary ammonium salt having the carbon-carbon unsaturated bond-containing hydrocarbon group, the organic peroxide, the surfactant and/or the polymeric protective colloid are mixed into the conjugated diene rubber latex.

### Examples

In the following, the present invention will be explained more specifically by giving examples and comparative examples, but the invention is not limited to these examples. "Part(s)" in these examples and comparative examples is based on weight, unless particularly specified otherwise. Tests and evaluations were as described below.

### (1) Gel increased rate

A sample is cut in a square form with about 5mm sides from a rubber glove obtained, and precisely weighed. It is placed in a JIS standard sieve of 80 meshes, and dipped in 80ml of methylethyl ketone (MEK) for 24 hours. The sieve is taken out of the MEK, dried in air for 1 hour, and then dried at 105 °C for 1 hour. The weight including the sieve was precisely measured again, and a ratio (% by weight) of the gel component held on the sieve to the starting sample was determined as the content of the gel. Next, this value was compared with that in Comparative Example 1 (where no organic peroxide was added) to determine an increased rate.

### (2) Tensile strength and elongation

A dumbbell-shaped test piece was prepared from the obtained rubber glove by using a dumbbell variety No. 2 (small form). The test piece was pulled at a pulling rate of 500 mm/minute, and a tensile stress (MPa) at an elongation of 300%, a tensile strength at break (MPa) and an elongation (%) at break were measured.
The smaller is the 300% tensile stress, the more excellent the softness of touch and comfortable fittingness are.

### (3) Flexural fatigue resistance

Ten subjects wore the obtained rubber gloves, and performed light works of keyboard inputting operations. Every one-hour lapse after the start of the work, forked portions between fingers of the rubber gloves were observed, and whether fine cracks were formed or not was confirmed.
With respect to each test, the time period until which the fine cracks were formed in the rubber glove was measured, and then eight measured time periods were arithmetically averaged, excluding the shortest and longest time periods. The average values are shown. Note that this wearing test was performed for the maximum time period of 6 hours.
The longer is the above time period, the more excellent the flexural fatigue resistance is.

### (4) Allochroic property with copper ions

The obtained rubber gloves were dipped in a 3% aqueous solution of copper sulfate for 30 seconds, and one hour later allochroic degrees of the gloves were visually judged.
It is judged that the rubber gloves with which change in color was observed are themselves likely to color when they are worn for a long time.

### (5) Surface electric resistance

A test piece having a square shape with 10cm sides was cut out of a palm portion of a rubber glove and left over night at 20°C in a temperature-controlled/humidity controlled chamber at a relative humidity of 65%, and thereafter the surface resistivity and the volume resistivity of the test piece were measured in the same atmosphere under a measuring voltage of 250V according to ASTM D257-93.

### (Production Example 1: Caboxy-modified NBR latex)

Into a polymerization reaction vessel were charged 28 parts of acrylonitrile, 66 parts of 1,3-butadiene, 6 parts of methacrylic acid, 0.3 part of t-dodecyl mercaptan, 132 parts of ion-exchanged water, 3 parts of sodium dodecylbenzene sulfonate, 0.5 part of sodium salt of a condensation product of β-naphthalene sulfonic acid and formalin, 0.3 part of potassium persulfate and 0.05 part of tetra-sodium ethylenediamine tetra-acetate, and polymerization was initiated while a polymerization temperature was kept at 37°C.
At a point of time when a polymerization conversion rate reached 60%, 0.15 part of t-dodecyl mercaptan was added, and the polymerization temperature was raised to 40 °C. Thereafter, at a point of time when the polymerization conversion rate reached 80%, 0.15 part of t-dodecyl mercaptan was added and the polymerization reaction was continued. The reaction was performed until the polymerization conversion rate reached 94%. Then, 0.1 part of sodium dimethyl dithiocarbamate was added as a polymerization terminator, thereby stopping the polymerization reaction.
After unreacted monomers were removed from the copolymer latex obtained, a conjugated diene rubber latex A (carboxy-modified NBR latex) having the concentration of the solid component of 40% by weight and pH8 was obtained by adjusting the pH and the concentration of the solid component of the latex.

### (Production Example 2: Production of carboxy-modified SBR latex)

To a polymerization reaction vessel were charged 42 parts of styrene, 54 parts of 1,3-butadiene, 4 parts of methacrylic acid, 0.3 part of t-dodecyl mercaptan, 132 parts of ion-exchanged water, 3 parts of sodium dodecylbenzene sulfonate, 0.5 part of sodium salt of the condensation product of β-naphthalene sulfonic acid and formalin condensation product, 0.3 part of potassium persulfate, and 0.05 part of tetra-sodium ethylenediamine tetra-acetate. Polymerization was initiated while the polymerization temperature was kept at 60°C.
At a point of time when the polymerization conversion rate reached 60%, 0.15 part of t-dodecyl mercaptan was added, and the polymerization temperature was raised to 70°C. At a point of time when the polymerization conversion rate reached 80%, 0.15 part of t-dodecyl mercaptan was added, the polymerization reaction was continued, and the reaction was performed until the polymerization conversion rate reached 95%. After that, 0.1 part of sodium dimethyl dithiocarbamate was added as a polymerization terminator to stop the polymerization reaction.
After unreacted monomers were removed from the copolymer latex obtained, a conjugated diene rubber latex B (carboxy-modified SBR latex) having the concentration of the solid component of 40% by weight and pH8 was obtained by adjusting the pH and the concentration of the solid component of the latex.

### (Production Example 3: Production of polyisoprene latex)

Into 566 parts of pentane was dissolved 100 parts by weight of polyisoprene obtained by solution polymerization with the use of a commercially available butyl lithium catalyst. To the solution was added 1,000 parts of an aqueous solution in which 20 parts by weight of sodium straight-chain alkylbenzene sulfonate was dissolved. The mixture was vigorously stirred at 10,000rpm for 30 minutes, thereby forming an emulsion.
Pentane as the solvent was completely removed from the emulsion under reduced pressure, and condensation was performed, while the temperature was then raised to 60°C.
Thereby, a conjugated diene rubber latex C (polyisoprene latex) having the concentration of a solid content of 65% was obtained.

### (Example 1)

To 67.3 parts of water at 25°C under stirring were added 0.5 part of microcrystalline cellulose (SIGMA-ALDRICH Corp. reagent), 0.1 part of a polyethylene glycol alkyl ether (Emulgen 105 manufactured by Kao Corporation) and 26.7 parts of dibenzoly peroxide (moisture absorbed amount of 25% by weight, solid at 30°C, the average diameter 100 µm, and the 10-hour half-life temperature 73.6°C). The mixture was stirred at 8, 000rpm for 10 minutes, thereby obtaining a uniform dispersion of dibenzoyl peroxide. This dispersion was left for 24 hours, but precipitation was not observed.
To the conjugated diene rubber latex A was added a 5% by weight aqueous solution of a potassium hydroxide to adjust the pH to 9.5. By adding water to this, a latex having a solid content of 30% by weight was obtained. To this latex was added, at 25°C under stirring, the above dispersion containing dibenzoyl peroxide in such an amount that it amounted to 0.5 part for 100 parts of the solid component of the latex. Then, the reaction mixture was aged under stirring for 10 hours, thereby obtaining a dip-forming composition.

A glove form was dipped for 5 seconds in an aqueous solution of a coagulant in which 20 parts of calcium nitrate, 0.05 part of polyethylene glycol octylphenyl ether and 80 parts of water were mixed. Then, after the glove form was pulled up, it was dried at 50°C for 10 minutes, thereby attaching the coagulant onto the glove form.
Next, the glove form attached with the coagulant was dipped in the above dip-forming composition for 6 seconds, pulled up, and dried at 50°C for 10 minutes. Next, the form was dipped in warm water at 40°C for 3 minutes, thereby dissolving out water-soluble impurities.
After that, the glove form was dried at 70°C for 10 minutes, and subsequently heated at 120°C for 20 minutes, thereby crosslinking a dip-formed layer. Next, the crosslinked dip-formed layer was removed from the glove form, thereby obtaining a rubber glove having a thickness of 0.1mm. Test and evaluation results on the rubber glove are shown in Table 1.

### (Example 2)

A rubber glove was obtained in the same manner as in Example 1 except that the addition amount of dibenzoyl peroxide to the conjugated diene rubber latex A in Example 1 was changed to give 1 part (calculated as the pure amount) for 100 parts of the solid component of the latex. Test and evaluation results on the rubber glove are shown in Table 1.

### (Example 3)

A rubber glove was obtained in the same manner as in Example 2 except that the dibenzoly peroxide in Example 2 was replaced by dilauroyl peroxide in the same pure amount. Test and evaluation results on the rubber glove are shown in Table 1.

### (Example 4)

A rubber glove was obtained in the same manner as in Example 1 except that the conjugated diene rubber latex A in Example 1 was replaced by the conjugated diene rubber latex B. Test and evaluation results on the rubber glove are shown in Table 1.

### (Example 5)

A rubber glove was obtained in the same manner as in Example 1 except that the conjugated diene rubber latex A in Example 1 was replaced by the conjugated diene rubber latex C. Test and evaluation results on the rubber glove are shown in Table 1.

### (Comparative Example 1)

A rubber glove was obtained in the same manner as in Example 1 except that the dibenzoyl peroxide in Example 1 was replaced by potassium persulfate in that pure parts by weight. Test and evaluation results on the rubber glove are shown in Table 1.

### (Comparative Example 2)

A rubber glove was obtained in the same manner as in Example 1 except that t-butylperoxy-2-ethylhexanoate (Perbutyl O manufactured by NOF Corporation, liquid at 30°C, the 10-hour half-life temperature 72.1°C) was used in that pure parts by weight in place of the dibenzoyl peroxide. Test and evaluation results on the rubber glove are shown in Table 1.

### (Comparative Example 3)

Instead of using the microcrystalline cellulose in the preparation of the dispersion of dibenzoyl peroxide in Example 1, a polyethylene glycol alkyl ether (Emulgen 105 manufactured by Kao Corporation) was added in that part by weight. However, precipitation occurred immediately after the stirring was stopped, so that a dispersion of the organic peroxide stable for a long time period could not be obtained. Accordingly, a dip-forming test was cancelled.

### (Comparative Example 4)

Instead of using the polyethylene glycol alkyl ether in the preparation of the dispersion of dibenzoyl peroxide in Example 1, microcrystalline cellulose was added inthat parts by weight. However, precipitation occurred immediately after the stirring was stopped, so that a dispersion of the organic peroxide stable for a long time period could not be obtained. Accordingly, a dip-forming test was cancelled.

### (Comparative Example 5)

A rubber glove was obtained in the same manner as in Example 1 except that the dip-forming composition was subjected to dip forming after being stirred for 0.5 hour without being aged. Test and evaluation results on the rubber glove are shown in Table 1.

### (Comparative Example 6)

To the conjugated diene rubber latex A was added a 5% by weight aqueous solution of potassium hydroxide to adjust the pH to 9.5. Water was added to this to obtain a latex having a solid content of 30% by weight. To this latex was added, under stirring at 25°C, a dispersion containing 1.0 part of sulfur, 0.5 part of zinc dibutyl dithiocarbamate as a vulcanization accelerator and 1 part of Chinese white (zinc oxide) with respect to 100 parts of the solid component of the latex. Further, the mixture was aged under stirring for 10 hours, thereby obtaining a dip-forming composition. By using this dip-forming composition, a rubber glove was obtained in the same manner as in Example 1. Test and evaluation results on the rubber glove are shown in Table 1.

**Table 1**

| | | Example | | | | | Comparative Example | | | |
|---|---|---|---|---|---|---|---|---|---|---|
| | | 1 | 2 | 3 | 4 | 5 | 1 | 2 | 5 | 6 |
| | Kind of latex *1 | A | A | A | B | C | A | A | A | A |
| | Crosslinking agent *2 | BPO | BPO | LPO | BPO | BPO | KPS | BPE | BPO | Sulfur |
| Dip-forming composition | Amount of crosslinking agent (part) | 0.5 | 1 | 1 | 0.5 | 0.5 | 0.5 | 0.5 | 0.5 | 1 |
| | Dispersion stabilizer *3 | S/P | S/P | S/P | S/P | S/P | S/P | S/P | S/P | - |
| | Aging time (hour) | 10 | 10 | 10 | 10 | 10 | 10 | 10 | - | 10 |
| | Gel increased rate (wt%) | 40 | 65 | 15 | 35 | 25 | 0 | 0 | 3 | 80 |
| Characteristics of dip-formed article | 300% tensile stress (MPa) | 1.4 | 1.5 | 1.3 | 2.5 | 1.2 | 0.97 | 0.95 | 1.2 | 2.5 |
| | Tensile strength (MPa) | 27 | 23 | 25 | 28 | 22 | 18 | 17 | 20 | 30 |
| | Elongation (%) | 780 | 740 | 800 | 650 | 880 | 950 | 960 | 850 | 630 |
| | Flexural fatigue resistance | >6Hr | >6Hr | >6Hr | >6Hr | >6Hr | <0.5 | <0.5 | 1 | >6Hr |
| | Colored or not with copper ions | Not colored | Not colored | Not colored | Not colored | Not colored | Brown | Not colored | Not colored | Brown |

| | | | | | | | | | | |
|---|---|---|---|---|---|---|---|---|---|---|
| Note: *1 A: Carboxy-modified NBR latex, B: Carboxy-modified SBR latex, C: Polyisoprene latex *2 BPO: Dibenzoyl peroxide, LPO: Dilauroyl peroxide, BPE: t-Butylperoxy-2-ethylhexylhexanoate *3 S/P: Surfactant + water-soluble polymer | | | | | | | | | | |

As shown in Table 1, all of the dip-formed articles obtained by dip-forming the dip-forming composition of the present invention had large gel-increased rates because of enhanced crosslinked degrees. Also, said dip-formed articles were excellent in tensile strength, elongation and flexural fatigue resistance, so it is judged that the softness of touch and comfortable fittingness are good. Further, since the color was not changed with copper ions, it is judged that said dip-formed articles are less likely to color even after being worn at work for a long time period (Examples 1 to 5).
On the other hand, when the inorganic peroxide was used as the crosslinking agent for the conjugated diene rubber, the dip-formed article colored brown through oxidation was obtained (Comparative Example 1). Meanwhile, when the organic peroxide being liquid at 30 °C was used, no crosslinking reaction progressed, increase in the gel was not observed, and the dip-formed article having an inferior flexural fatigue resistance was obtained (Comparative Example 2).
When the dip-forming composition without aging was used, microcrystals of the organic peroxide were precipitated. Therefore, since the crosslinked degree decreased and the gel-increased rate dropped, the dip-formed article obtained had an inferior flexural fatigue resistance (Comparative Example 5). When sulfur and its vulcanization accelerator were used as the crosslinking agent for the conjugated diene rubber, the dip-formed article obtained had high tensile stress and low elongation. Thus, it was judged that the product had an inferior softness of touch and comfortable fittingness. Further, since the dip-formed article was colored with copper ions, it was judged that it would color when used for a long time period (Comparative Example 6).

### (Example 6)

To 67.3 parts of water at 25°C under stirring were added 0.1 part of the polyethylene glycol alkyl ether (Emulgen 105 manufactured by Kao Corporation), 0.5 part of microcrystalline cellulose (SIGMA-ALDRICH Corp. reagent), and 26.7 parts of dibenzoyl peroxide (moisture absorbed amount of 25% by weight, solid at 30°C, the average particle diameter of 100 µm and the 10-hour half-life temperature of 73.6°C). A uniform dispersion of the dibenzoyl peroxide was obtained by stirring the mixture at 8,000rpm for 10 minutes.

Into the conjugated diene rubber latex A was added and uniformly mixed a 10% aqueous solution of diallyldimethyl ammonium chloride expressed by the following formula (2) (Newfrontier C-1615 manufactured by Dai-Ichi Kogyo Seiyaku Co., Ltd.) at a rate that the diallyldimethyl ammonium chloride was 1 part for 100 parts of the solid component of the conjugated diene rubber latex A.

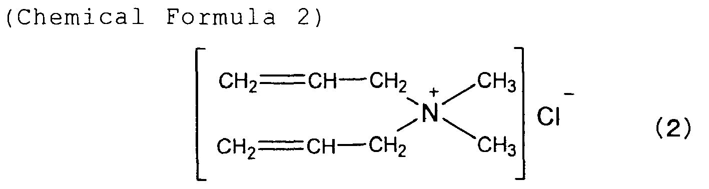

A 5% by weight aqueous solution of potassium hydroxide was added to the mixture to adjust the pH to 9.5, and further water was added to obtain a latex having a solid content of 30% by weight. The above dispersion containing dibenzoyl peroxide was added to the latex at 25°C under stirring in such an amount that the dibenzoyl peroxide was 0.5 part for 100 parts of the solid component of the latex. The resultant was aged under stirring for 10 hours, thereby obtaining a dip-forming composition.
A glove form was dipped, for 5 seconds, into an aqueous coagulant solution consisting of 20 parts of calcium nitrates, 0.05 part of polyoxyethylene octylphenyl ether and 80 parts of water. After being pulled up, the glove form was dried at 50° C for 10 minutes, thereby attaching the coagulant onto the glove form.

Next, the glove form attached with the coagulant was dipped in the above dip-forming composition for 6 seconds, pulled up, and dried at 50°C for 10 minutes. Then, the form was dipped in warm water at 40 °C for 3 minutes, thereby dissolving out water-soluble impurities.
Next, the glove form was dried at 70°C for 10 minutes, and subsequently heated at 120°C for 20 minutes to crosslink the dip-formed layer. Then, the crosslinked dip-formed layer was peeled from the glove form, thereby obtaining a rubber glove having a thickness of 0.1 mm. Test and evaluation results on the rubber glove are shown in Table 2.

### (Example 7)

A rubber glove was obtained in the same manner as in Example 6 except that dilauroyl peroxide was used in that pure weight in place of dibenzoyl peroxide in Example 6. Test and evaluation results on the rubber glove are shown in Table 2.

### (Example 8)

A rubber glove was obtained in the same manner as in Example 6 except that the conjugated diene rubber latex B was used in place of the conjugated diene rubber latex A in Example 6. Test and evaluation results on the rubber glove are shown in Table 2.

### (Example 9)

A rubber glove was obtained in the same manner as in Example 6 except that the conjugated diene rubber latex C was used in place of the conjugated diene rubber latex A in Example 6. Test and evaluation results on the rubber glove are shown in Table 2.

### (Example 10)

A rubber glove was obtained in the same manner as in Example 6 except that cetyltrimethyl ammonium chloride (Quartamin 60W manufactured by Kao Corporation, the following formula (3)) was used in place of diallyldimethyl ammonium chloride in Example 6. Text and evaluation results on the rubber glove are shown in Table 2.

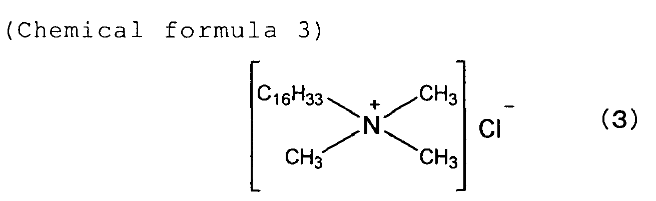

### (Example 11)

A rubber glove was obtained in the same manner as in Example 6 except that 1 part of sodium lauryl sulfate was used in place of 1 part of diallyldimethyl ammonium chloride in Example 6. Text and evaluation results on the rubber glove are shown in Table 2.

### (Comparative Example 7)

A rubber glove was obtained in the same manner as in Example 6 except that the dispersion of dibenzoyl peroxide was not added in the conjugated diene rubber latex A of Example 6, although diallyldimethyl ammonium chloride was added. Test and evaluation results on the rubber glove are shown in Table 2.

### (Comparative Example 8)

A dispersion of a vulcanizing agent, 10.06 parts, which had a concentration of a solid component of 50%, was prepared by mixing 1.5 parts of sulfur, 1 part of zinc dibutyl dithiocarbamate, 1 part of zinc oxide, 1.5 parts of titanium oxide, 0.03 part of potassium hydroxide and 5.03 parts of water.
After 10.06 parts of the dispersion of the above vulcanizing agent was added for 100 parts of the solid component of the conjugated diene rubber latex A, a 5% aqueous solution of potassium hydroxide and ion-exchanged water were added, thereby obtaining a dip-forming composition, having pH 10 and a solid content of 30%.
A rubber glove was obtained in the same manner as in Example 6 except that the above composition was used as the dip-forming composition in Example 6. Test and evaluation results on the rubber glove are shown in Table 2.

**Table 2**

| | | Example | | | | | | Comparative Example | |
|---|---|---|---|---|---|---|---|---|---|
| | | 6 | 7 | 8 | 9 | 10 | 11 | 7 | 8 |
| Dip-forming composition | Kind of latex *1 | A | A | B | C | A | A | A | A |
| | Crosslinking agent *2 | BPO | LPO | BPO | BPO | BPO | BPO | None | Sulfur |
| | Quaternary ammonium salt, etc.*3 | a | a | a | a | b | c | a | a |
| | Surface electric resistance (10⁸Ω/square) | 1.5 | 3 | 50 | 80 | 500 | 400 | 20 | 25 |
| | 300% tensile stress (MPa) | 1.6 | 1.5 | 3 | 1.3 | 1.5 | 1.4 | 1.2 | 2.5 |
| Characteristics of dip-formed article | Tensile strength (MPa) | 21 | 19 | 25 | 20 | 20 | 27 | 16 | 28 |
| | Elongation (%) | 710% | 750% | 680% | 800% | 750% | 780% | 800% | 620% |
| | Flexural fatigue resistance | >6Hr | >6Hr | >6Hr | >6Hr | >6Hr | >6Hr | <0.5 | >6Hr |
| | Colored or not with copper ions | Not colored | Not colored | Not colored | Not colored | Not colored | Not colored | Not colored | Brown |
| | Gel increased rate (wt%) | 55 | 30 | 45 | 35 | 40 | 40 | 0 | 80 |

| | | | | | | | | | |
|---|---|---|---|---|---|---|---|---|---|
| Note: *1 A: Carboxy-modified NBR latex, B: Carboxy-modified SBR latex, C: Polyisoprene latex *2 BPO: Dibenzoyl peroxide, LPO: Dilauroyl peroxide *3 a : Diallyldimethyl ammonium chloride, b: cetyltrimethyl ammonium, c: Sodium lauryl sulfate | | | | | | | | | |

As shown in Table 2, all of the dip-formed articles obtained by using and dip-forming the dip-forming compositions according to the present invention, which employed carbon-carbon unsaturated bond-containing hydrocarbons-containing quaternary ammonium salt, had small surface electric resistances (Examples 6 to 9). Further, it was seen that all of the dip-formed articles obtained by dip-forming the dip-forming compositions according to the present invention had increased gel. Since the tensile strength and the elongation are sufficiently high and the 300% tensile stress is sufficiently low, it is judged that the softness of touch and comfortable fittingness are good. Further, since the color is not changed with copper ions, it is judged that the products are less likely to color even after being worn and subjected to working for a long time period (Examples 6 to 11). Even when the carboxy-modified SBR and polyisoprene latexes, which are known to have high insulation with surface electric resistances of not less than 10¹²Ω/square, were used as the conjugated diene rubber latex, the compositions according to the present invention remarkably improved the antistatic property with a level of 10⁹Ω/square (Examples 8 and 9). Particularly when the conjugated diene rubber containing the carbon-carbon unsaturated bond-containing hydrocarbon-containing quaternary ammonium salt was the carboxy-modified NBR, the surface electric resistances were considerably low, and the antistatic property was remarkably excellent (Examples 6 to 7).
On the other hand, when the dip-forming composition containing no organic peroxide was used, the dip-formed article had conspicuously inferior flexural fatigue resistance, and the tensile strength was low (Comparative Example 7). When sulfur is used as the crosslinking agent for the conjugated diene rubber, the dip-formed article obtained has a low elongation and a high 300% tensile stress. Thus, it is judged that the softness of touch and comfortable fittingness is inferior. Further, since the dip-formed article was colored with copper ions, it was judged that it would be colored when used for a long time period (Comparative Example 8).

## Claims

1. A dip-forming composition, **characterized in that** the composition is obtained by converting an organic peroxide being solid at 30°C under normal pressure to an aqueous dispersion in the presence of a surfactant and a polymeric protective colloid, adding the dispersion to a conjugated diene rubber latex, and aging the mixture.

2. The dip-forming composition according to claim 1, **characterized in that** the organic peroxide is dibenzoyl peroxide or dilauroyl peroxide.

3. The dip-forming composition according to claim 1, **characterized in that** the surfactant is an anionic surfactant or a nonionic surfactant.

4. The dip-forming composition according to claim 1, **characterized in that** the polymeric protective colloid is microcrystalline cellulose, hydroxyalkyl cellulose or polyvinyl alcohol.

5. The dip-forming composition according to claim 1, **characterized in that** the conjugated diene rubber latex is a latex of a copolymer of a conjugated diene monomer, a carboxyl group-containing ethylenically unsaturated monomer and a monomer copolymerizable therewith.

6. The dip-forming composition according to claim 5, **characterized in that** the monomer copolymerizable with the conjugated diene monomer and the carboxyl group-containing ethylenically unsaturated monomer is an ethylenically unsaturated nitrile monomer.

7. The dip-forming composition according to claim 1, **characterized in that** a condition for the aging is to perform stirring at 10 to 50°C for not less than 1 hour.

8. The dip-forming composition according to claim 1, containing:
0.01 to 5 parts by weight of the organic peroxide for 100 parts by weight of a solid component of the conjugated diene rubber latex, and
0.05 to 5 parts by weight of the surfactant and 0.1 to 20 parts by weight of the polymeric protective colloid for 100 parts by weight of the organic peroxide.

9. The dip-forming composition according to any one of claims 1 to 8, containing a carbon-carbon unsaturated bond-containing hydrocarbon group-containing quaternary ammonium salt.

10. The dip-forming composition according to claim 9, **characterized in that** the carbon-carbon unsaturated bond-containing hydrocarbon group of the carbon-carbon unsaturated bond-containing hydrocarbon group-containing quaternary ammonium salt is an allyl group.

11. The dip-forming composition according to claim 8, containing 0.1 to 10 parts by weight of a carbon-carbon unsaturated bond-containing hydrocarbon group-containing quaternary ammonium salt for 100 parts by weight of the solid component of the conjugated diene rubber latex.

12. A process for making a dip-forming composition, comprising:
a step of preparing a quaternary ammonium salt-added latex by adding and mixing an aqueous solution of a carbon-carbon unsaturated bond-containing hydrocarbon group-containing quaternary ammonium salt into a conjugated diene rubber latex;
a step of preparing an aqueous dispersion of an organic peroxide by dispersing the organic peroxide in an aqueous medium with use of a surfactant and a polymeric protective colloid; and
a step of adding and mixing the aqueous dispersion of the organic peroxide into the quaternary ammonium salt-added latex.

13. A dip-formed article obtained by dip forming the dip-forming composition according to any one of claims 1 to 11.

14. The dip-formed article according to claim 13, which is a glove.
